(19) Europäisches Patentamt
European Patent Office
Office européen des brevets

(11) EP 0 826 698 A1

(12) # DEMANDE DE BREVET EUROPEEN

(43) Date de publication:
**04.03.1998 Bulletin 1998/10**

(51) Int Cl.[6]: **C08F 4/00**

(21) Numéro de dépôt: **97401441.7**

(22) Date de dépôt: **20.06.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **30.08.1996 FR 9610634**

(71) Demandeur: **ELF ATOCHEM S.A.**
**92800 Puteaux (FR)**

(72) Inventeurs:
- **Senninger, Thierry**
  **57700 Hayange (FR)**
- **Sanchez, Laurent**
  **64000 Pau (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(54) **Procédé de (co)polymérisation radicalaire contrôlée de monomères (méth)acryliques et vinyliques en présence d'un complexe de Fe, Ru ou Os et (co)polymères obtenus**

(57) Ce procédé est caractérisé par le fait que l'on polymérise ou copolymérise en masse, solution, émulsion ou suspension, à une température pouvant descendre jusqu'à 0°C, au moins un desdits monomères en présence d'un système d'amorçage comprenant au moins un composé générateur de radicaux et au moins un catalyseur constitué par un complexe de métal $MA_a(L)_n$ où : M = Fe, Ru ou Os ; A = halogène ou pseudo-halogène ; les L, identiques ou différents, représentent chacun un ligand, pouvant être un ligand chiral, qui est choisi parmi PRR'R", P(OR)(OR')(OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué, au moins deux de ces ligands pouvant être reliés entre eux par un ou plusieurs radicaux bivalents ; a est un entier compris entre 1 et 3 ; n est un entier compris entre 1 et 3 ; et en l'absence d'activateurs; les systèmes chlorure de 1-phényléthyle/$RuCl_2$-$PPh_3$ et chlorure de benzyle/$FeCl_2$-$(EtO)_3P$ (Ph = phényle ; Et = éthyle) étant exclus dans le cas de la polymérisation du styrène.

EP 0 826 698 A1

## Description

La présente invention est relative à un procédé de polymérisation ou copolymérisation radicalaire contrôlée de monomères (méth)acryliques et/ou vinyliques (par exemple, vinylaromatiques) ainsi qu'aux polymères ou copolymères ainsi obtenus.

La polymérisation radicalaire constitue l'un des processus de polymérisation les plus exploités industriellement en raison de la variété des monomères polymérisables (70% des monomères commerciaux), de la facilité de mise en oeuvre et des procédés de synthèse utilisés (émulsion, suspension, masse, solution). Toutefois, il est difficile en polymérisation radicalaire classique de contrôler la dimension des chaînes polymères et la distribution des masses moléculaires. Les polymères ainsi préparés contiennent des chaînes de très grandes et très faibles masses (polydispersité large), ce qui conduit à des matériaux aux propriétés non contrôlées. De plus, l'addition séquencée de monomère conduit à un mélange d'homopolymères.

Les techniques de polymérisation ionique ou coordinative, quant à elles, permettent un contrôle correct du processus, mais les conditions de réaction qu'exigent ces méthodes de polymérisation ne sont pas toujours réalisables à l'échelle industrielle (pureté des monomères et réactifs, atmosphère inerte). De plus, de nombreux monomères ne peuvent être polymérisés par ces techniques.

Bien qu'il existe à ce jour quelques exemples de polymérisation radicalaire contrôlée de monomères (méth)acryliques ou vinylaromatiques, les systèmes en question nécessitent soit des températures de polymérisation élevées comme avec les systèmes CuCl/2,2'-bipyridine (Macromolecules, 1995, 28, 7901), soit la présence d'un activateur, de type acide de Lewis, sensible à l'eau (complexe de $RuCl_2(PPh_3)_3$) (Macromolecules, 1995, 28, 1721). Or, lorsque la température est élevée, l'autoamorçage thermique se produit, ce qui conduit, notamment, à une diminution du contrôle de la polymérisation.

En outre, pour la polymérisation en émulsion ou en suspension, il est connu que la plupart des procédés sont mis en oeuvre en milieu aqueux et, donc, il est nécessaire de travailler à des températures inférieures à 100°C pour assurer la stabilité de ces émulsions ou suspensions.

La température peut être, certes, abaissée, mais la présence d'acides de Lewis est alors nécessaire et cela implique de travailler en milieu anhydre.

Il est aussi nécessaire que le catalyseur ne soit pas dégradé par l'eau dans les conditions normales de polymérisation.

Le concept utilisé pour contrôler la polymérisation fait appel aux réactions d'oxydo-réduction par transfert d'atomes ou de groupes d'atomes de façon réversible. Le complexe métallique oscille entre deux degrés d'oxydation en permanence au cours de la polymérisation. Ce concept a été largement exploité en chimie organique et a été découvert par Kharasch en 1947 avec l'addition de polyhalogénométhanes sur des oléfines.

L'addition de polyhalogénométhanes sur des composés oléfiniques, en présence de complexes $FeX_2[P(OEt)_3]_3$ a été étudiée pour la synthèse de molécules de faibles masses (J. Org. Chem. 1990, 55, 1281 ; J. Am. Chem. Soc. 1988, 110, 5535). Cependant, ces complexes n'ont pas été utilisés pour une polymérisation contrôlée, particulièrement pour celle de monomères (méth)acryliques ou vinyliques.

Le but de la présente invention consiste, par conséquent, à remédier aux inconvénients précités et à réaliser des polymérisations radicalaires qui permettent un contrôle identique aux polymérisations ioniques et coordinatives dans des conditions de synthèse acceptables industriellement et qui, par conséquent, permettent de synthétiser des homopolymères et des copolymères statistiques ou séquencés purs, parfaitement définis, dont la longueur est prédéterminée, lesquels n'ont pu jusque là être synthétisés.

D'une façon générale, le but de l'invention est de présenter un procédé de polymérisation ou copolymérisation radicalaire de monomères (méth)acryliques et/ou vinyliques permettant de contrôler la croissance des chaînes de polymères, le processus de polymérisation s'effectuant en masse, solution, émulsion ou suspension jusqu'à ce que la totalité du ou des monomères précédents soit consommée.

Pour cela, il est nécessaire d'éviter ou tout au moins de limiter les réactions de terminaison par recombinaison et dismutation et de favoriser un amorçage rapide de la polymérisation ou copolymérisation.

C'est ainsi qu'un des buts essentiels de l'invention est de proposer des catalyseurs et des amorceurs qui permettent, sans nécessiter une modification appréciable de la technologie classique, d'obtenir, dans des conditions industriellement et économiquement valables, des polymères et copolymères répondant aux exigences commerciales de régiosélectivité, de stéréosélectivité, de contrôle des masses moléculaires et de leurs distributions.

A cet effet, on prévoit, suivant la présente invention, un procédé de polymérisation ou copolymérisation radicalaire contrôlée de monomères (méth)acryliques et/ou vinyliques, caractérisé par le fait que l'on polymérise ou copolymérise en masse, solution, émulsion ou suspension, à une température pouvant descendre jusqu'à 0°C, au moins un desdits monomères

- en présence d'un système d'amorçage comprenant au moins un composé générateur de radicaux et au moins un

catalyseur constitué par un complexe de métal, représenté par la formule suivante (I) :

$$MA_a(L)_n \quad (I)$$

dans laquelle :

- M représente Fe, Ru ou Os ;
- A représente un halogène ou un pseudo-halogène ;
- les L, identiques ou différents, représentent chacun un ligand, pouvant être un ligand chiral, qui est choisi parmi PRR'R", P(OR) (OR') (OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué,
  au moins deux de ces ligands pouvant être reliés entre eux par un ou plusieurs radicaux bivalents ;
- a est un entier compris entre 1 et 3 ;
- n est un entier compris entre 1 et 3 ;

- et en l'absence d'activateur, les systèmes chlorure de 1-phényléthyle / $RuCl_2$ - $PPh_3$ et chlorure de benzyle / $FeCl_2$ - $(EtO)_3P$ (Ph = phényle ; Et = éthyle) étant exclus dans le cas de la polymérisation du styrène.

Les deux systèmes qui viennent d'être cités ont été décrits dans les exemples respectivement 6 et 9 de la demande internationale WO 96/30421 ; dans ces exemples, on travaille à 130°C. Cette température peut être abaissée de façon importante dans le cas de la présente invention, comme l'illustre l'Exemple 12 ci-après pour la préparation du styrène.

M représente de préférence Fe.

A représente un halogène choisi parmi Cl, Br, F et I, ou un pseudo-halogénure choisi notamment parmi CN, NCS, $NO_2$ et $N_3$.

Les radicaux bivalents qui peuvent relier les ligands L peuvent être, par exemple, un radical alkylène, tel que les radicaux méthylène ($-CH_2-$), éthylène ($-CH_2CH_2-$), triméthylène ($-CH_2CH_2CH_2-$), lesquels peuvent eux-mêmes être substitués par exemple par un groupe alkyle en $C_1$-$C_{14}$ ou aryle.

En particulier, les L peuvent représenter chacun une monophosphine PRR'R", R, R' et R" représentant chacun indépendamment un groupe alkyle en $C_1$-$C_{14}$ pouvant être substitué par $SO_3^-$, COOH, alcoxy, alkyl-S-, ou un groupe aromatique pouvant être substitué par au moins un substituant choisi notamment parmi halogène, tel que Cl, Br, F, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

Comme exemples de groupes alkyle éventuellement substitués entrant dans la définition de R, R', R", on peut citer méthyle, éthyle, n-propyle, n-butyle, $NCCH_2CH_2-$, et comme exemples de groupes aromatiques, éventuellement substitués, on peut citer phényle, 1-naphtyle, p-$FC_6H_4$, m-$ClC_6H_4$, O-$CH_3OC_6H_4$, p-$CF_3C_6H_4$, 2,4,6-triméthoxyphényle, $C_6F_5$, o-$CH_3C_6H_4$, p-$CH_3C_6H_4$, m-$CH_3C_6H_4$.

On peut également citer les monophosphines porteuses de groupements destinés à les rendre solubles, telles que le triphénylphosphine monosulfonate de sodium (TPPMS) ou le triphénylphosphine trisulfonate de sodium (TPPTS) :

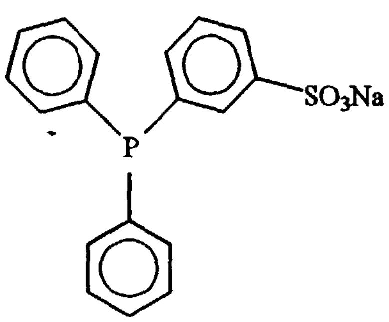

TPPMS

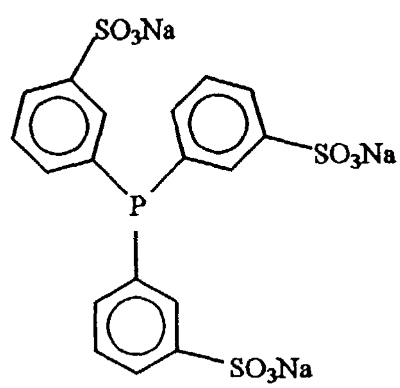

TPPTS

et les monophosphines chirales, telles que la (S)-(+)-néomenthyldiphénylphosphine ((S)-NMDPP) (CAS Number = 43077-29-8).

On peut également citer O-SMe-$C_6H_4$-P-$Ph_2$, ainsi que O-SMe-$C_6H_4$ -PPh-$C_6H_4$ -O-SMe.

Comme polyphosphines, on peut mentionner les composés de la formule générale suivante :

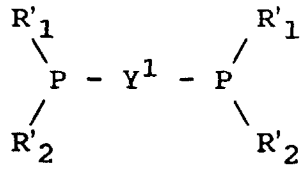

dans laquelle :

- $R'_1$ et $R'_2$ représentent chacun indépendamment alkyle, alkyle substitué, alkyle portant une fonction -COOH ou -$NH_2$, aryle, aryle substitué, tel que $C_6H_5$ ;
- $Y^1$ représente :
  - alkylène ; alkylène substitué ;
  - arylène ; arylène substitué ;
  - binaphtyle ;
  - 1,2-cyclopentyle ;
  - $-(CR'_3R'_4)_n-Z-(CR'_5R'_6)_m-$, avec $R'_3$ à $R_6$ représentant chacun indépendamment H ou alkyle ; n et m représentant chacun un nombre entier de 0 à 3; et
    et

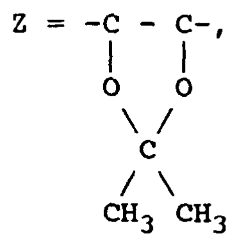

    pyridile ou phénylène ;
  - $-[(CR'_7R'_8)_p-T]_q-(CR'_9R'_{10})_r$, avec $R'_7$ à $R'_{10}$ représentant chacun indépendamment H ou alkyle ;
    p, q et r représentant un nombre entier de 1 à 5, et T = -O- ; -S- ; -$NR'_{11}$- ; -$PR'_{12}$ ($R'_{11}$, $R'_{12}$ = alkyle en $C_1$-$C_{14}$, aryle) ;
  - 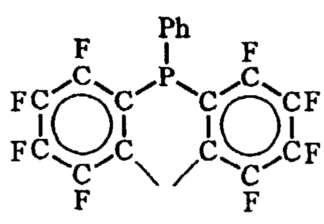 ;

    et
  - $-C_6H_5-CH=CH-C_6H_5-$.

On peut citer en particulier :

- les diphosphines telles que, par exemple :
  - $Me_2PCH_2CH_2PMe_2$
  - $Ph_2PCH_2PPh_2$

- $Ph_2PCH_2CH_2PPh_2$
- $Ph_2P(CH_2)_nPPh_2$, n = 3 à 14
- $(C_6F_5)_2PCH_2CH_2P(C_6F_5)_2$
- les diphosphines chirales capables d'apporter une stéréospécificité à la polymérisation, comme :
  - le (4R,5R)-(-)-O-isopropylidène-2,3-dihydroxy-1,4-bis(diphénylphosphino)butane ((R,R) -DIOP) (CAS Number = 37002-48-5) ;
  - le (4S,5S-(+)-O-isopropylidène-2,3-dihydroxy-1,4-· bis(diphénylphosphino)butane ((S,S) -DIOP) ;
  - le (R)-(+)-2,2'-bis(diphénylphosphino)-1,1'-binaphtyl ((R)-BINAP) (CAS Number = 76189-55-4) ;
  - le (S)-(-)-2,2'-bis(diphénylphosphino)-1,1'-binaphtyl ((S)-BINAP) (CAS Number 76189-56-5);
  - le (2S,3S)-(-)-bis(diphénylphosphino)butane ((S,S)-CHIRAPHOS) (CAS Number = 648976-28-2) ;
  - le (2S,4S)-(-)-2,4-bis(diphénylphosphino)-pentane ((S,S)-BDPP) (CAS Number = 77876-39-2) ;
  - le R-(+)-1,2-bis(diphénylphosphino)propane ((R)-PROPHOS) (CAS Number= 67884-32-6) ;
  - les diphosphines représentées par les formules :

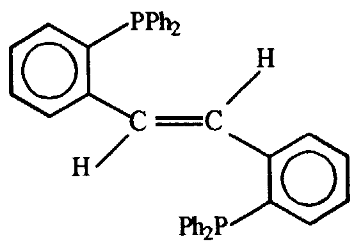
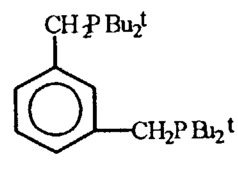
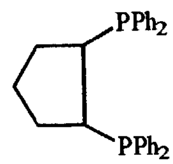

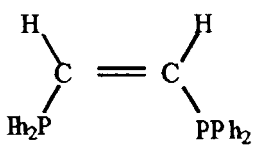
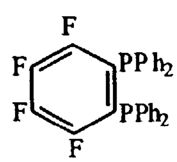
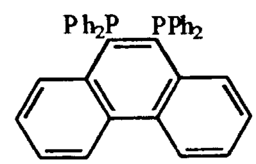

- les diphosphines contenant des hétéroatomes, comme par exemple :
  - $Ph_2PCH_2CH_2OCH_2CH_2PPh_2$ ;
  - $Ph_2PCH_2CH_2OCH_2CH_2OCH_2CH_2PPh_2$
  - Ph $(CH_2COOH)PCH_2CH_2P(CH_2COOH)Ph$ ;
  - $Ph_2P(CH_2)_nS(CH_2)_mS(CH_2)_pPPh_2$ ;
    (n, m et p représentant chacun indépendamment 2 ou 3) ;
  - les diphosphines de formule :

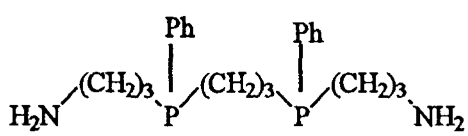
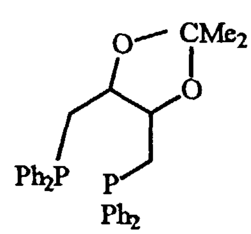
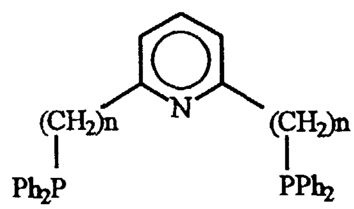

- les triphosphines, comme celles des formules :

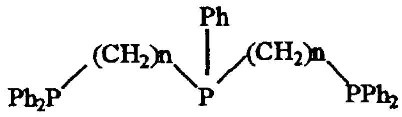

n = 2, 3

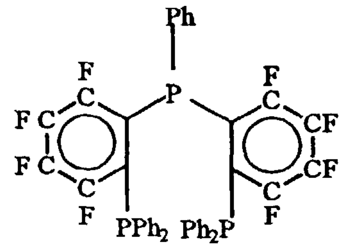

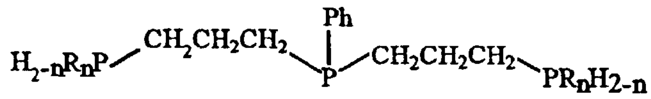

R = Me, Ph
n = 0, 1, 2

avec $PPh_2$ pouvant être remplacé par PPhMe ou $PMe_2$.

Les ligands peuvent également être choisis dans la famille des phosphites P(OR) (OR') (OR"), avec par exemple R, R' et R" choisis indépendamment parmi les groupes alkyles en $C_1$-$C_{14}$, particulièrement n-butyle, isopropyle, éthyle, méthyle, $(CH_3)_3CCH_2$-, et $C_6H_4$.

Le complexe de formule (I) peut par ailleurs porter une charge cationique, le rendant plus apte à coordiner les monomères, surtout les monomères polaires. Cette charge cationique peut être apportée par extraction d'un ligand halogéno, par exemple à l'aide de $AgBPh_4$, de $AgBF_4$, de $TlBF_4$ ou de $TlBPh_4$ ou encore de $AgB(C_6F_5)_4$ ou de $AgCF_3SO_3$.

Des complexes préférés ont la formule $FeX_2(PPh_3)_2$ ou $FeX_2[P(OR)_3]_3$, X représentant un halogène et R un groupe alkyle en $C_1$-$C_{14}$ ; ils sont particulièrement $FeCl_2(PPh_3)_2$, $FeCl_2[P(OEt)_3]_3$, $FeBr_2(PPh_3)_2$ ou $FeBr_2[P(OEt)_3]_3$.

Le complexe de formule (I), et en particulier le complexe du fer, peut être introduit directement dans le milieu réactionnel, ou bien il peut être formé in situ dans ce milieu, à partir d'un sel de métal (II) et du ou des ligands tels que phosphine ou phosphite.

Le catalyseur ne jouant pas le rôle de générateur de radicaux, il est donc indispensable de lui associer un tel composé. La réaction entre le générateur de radicaux et l'espèce du métal M décrite ci-avant donne lieu à une polymérisation contrôlée. On pourra ainsi poursuivre une polymérisation en ajoutant une nouvelle dose d'un monomère, éventuellement différent du premier. Si ce monomère est différent du premier, et qu'il est ajouté après épuisement du premier (ou jusqu'à une conversion élevée, supérieure à 80%, de préférence de 95%), on obtiendra un copolymère séquencé. S'il est ajouté en même temps que le premier, la copolymérisation sera aléatoire et on obtiendra un copolymère statistique. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent particulièrement bien sont des composés halogénés activés par des effets électroniques donneurs et/ou récepteurs sur l'atome de carbone en position α du ou des halogènes dudit composé, notamment ceux indiqués ci-après :

Lorsque le générateur de radicaux est monofonctionnel, il peut être choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-

$C_{14}$ ; et
- Z = Cl ou Br,

par exemple, le tétrachlorure de carbone, le chloroforme, le tétrabromure de carbone, le bromotrichlorométhane, et le 2,2,2-tribromoéthanol ; on cite en particulier le bromotrichlorométhane ;

(b) les dérivés de formule :

$$R^3CCl_3$$

où $R^3$ représente un groupe phényle ; benzyle benzoyle ; alcoxycarbonyle ; $R^4CO$ avec $R^4$ représentant alkyle en $C_1$-$C_{14}$ ou aryle ; alkyle ; mésityle ; trifluorométhyle ; ou nitro,
comme, par exemple, l'α,α,α-trichlorotoluène, l'α,α,α-trichloroacétophénone, le trichloroacétate d'éthyle, le 1,1,1-trichloroéthane, le 1,1,1-trichloro-2-phényléthane, le trichlorométhylmésitylène, le 1,1,1-trichloro-2,2,2-trifluoroéthane et le trichloronitrométhane ;

(c) les dérivés de formule :

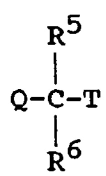

dans laquelle :

- Q représente un atome de chlore ou de brome ou un groupe acétate

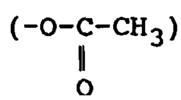

ou trifluoroacétate

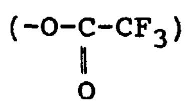

ou triflate ($O_3SCF_3$) ;
- $R^5$ représente un atome d'hydrogène, un groupe alkyle en $C_1$-$C_{14}$ ou un groupe aromatique, par exemple du type benzénique, anthracénique ou naphtalénique, ou un groupe $-CH_2OH$ ;
- T représente un groupe

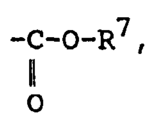

avec $R^7$ représentant chacun hydrogène ou un groupe alkyle ou aromatique; un groupe CN ; un groupe

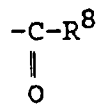

avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9CO$, avec $R^9$ représentant alkyle en $C_1$-$C_{14}$ ou aryle ;

- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

comme, par exemple, l'acide 2-bromopropionique, l'acide 2-bromobutanoïque, l'acide 2-bromohexanoïque, le 2-bromo-2-méthylpropionate d'éthyle, le bromoacétonitrile, le 2-bromopropionitrile, la 2-bromoisobutyrophénone et le chloroacétylisocyanate ; le 2-bromo-2-nitro-1,3-propanediol et le 2-bromo-2-nitropropane ;

(d) les composés lactones ou lactames halogénés en α, comme l'α-bromo-α-méthyl-γ-butyrolactone ou α-bromo-γ-valérolactone, le lauryllactame halogéné ou le caprolactame halogéné ;

(e) les N-halosuccinimides, comme le N-bromosuccinimide, et les N-halophtalimides, comme le N-bromophtalimide ;

(f) les halogénures (chlorures et bromures) d'alkyl-sulfonyle, le reste alkyle étant notamment en $C_1$-$C_{14}$, ainsi que les halogénures d'arylène-sulfonyle, tels que ceux de formule :

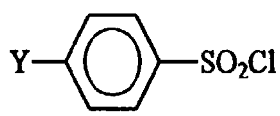,

où Y = Me, Cl, OMe, $NO_2$

(g) les composés de formule :

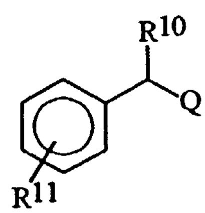

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ($SO_3^-Na^+$ ou $K^+$) ; et
- Q a la signification donnée précédemment ;

(h) les composés de formule :

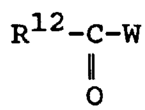

où :

- $R^{12}$ représente alkyle en $C_1$-$C_{14}$ ou aryle ; et
- W représente un halogène, préférentiellement Cl et Br, ou un pseudohalogénure tel que $N_3$, SCN ;

(i) les composés de formule :

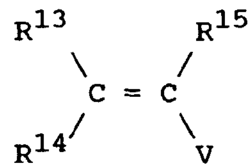

où :

- $R^{13}$, $R^{14}$ et $R^{15}$ représentent chacun indépendamment alkyle en $C_1$-$C_{14}$ ou aryle ; et
- V représente un halogène, tel que préférentiellement Cl, Br, ou également un groupement acétate, trifluoroacétate, triflate ;

et

(j) les halogénures aromatiques de formule :

$$Ar - U$$

où :

- Ar représente un groupement aromatique tel que $C_6H_5$- pouvant être substitué en position méta, ortho ou para par un groupement électroattracteur, tel que $NO_2$, $NO_3$, $SO_3$, ou électrodonneur, tel qu'un groupement alkyle ou un groupement -ONa ; et
- U représente un halogène, tel que préférentiellement Cl ou Br.

On peut également envisager l'utilisation de générateurs de radicaux bifonctionnels et de fonctionnalité supérieure ; les générateurs de radicaux bifonctionnels peuvent être constitués de deux générateurs de radicaux monofonctionnels $A^1$ et $A^2$ issus des classes (c) à (j) précitées, reliés par une chaîne d'unités méthylène ou par un cycle benzénique, tels que représentés par les formules :

$$A^1\text{-}(CH_2)_p\text{-}A^2$$

avec p entier de 1 à 14,

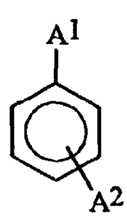

et

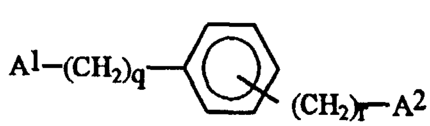

avec q et r représentant chacun indépendamment un entier de 1 à 14.

Dans le cas où $A^1$ et $A^2$ sont issus de la classe (c), on peut présenter les générateurs de radicaux bifonctionnels sous la formule

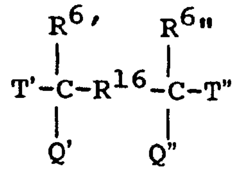

dans laquelle :

- T' et T" représentent chacun indépendamment un groupe entrant dans la définition de T ;
- Q' et Q" représentent chacun indépendamment un groupe entrant dans la définition de Q ;
- $R^{6'}$ et $R^{6''}$ représentent chacun indépendamment un groupe entrant dans la définition de $R^6$ ; et
- $R^{16}$ représente Un groupe $-(CH_2)_p-$,

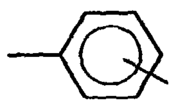

,

ou

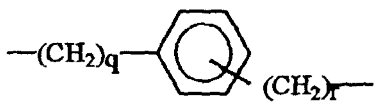

tels que définis ci-dessus.

On peut par exemple citer les amorceurs bifonctionnels des formules :

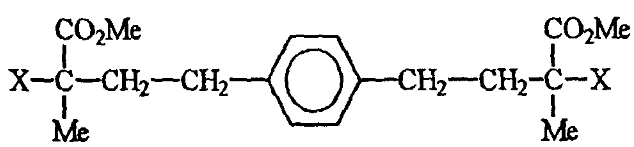

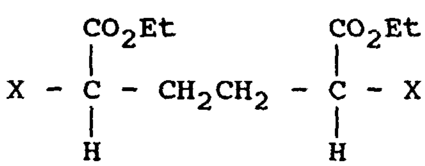

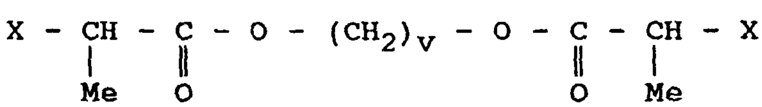

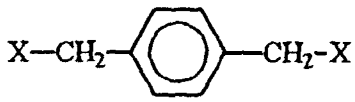

avec X = halogène, tel que Br et Cl ; et v = entier de 1 à 14.

L'emploi d'un amorceur bifonctionnel permet la préparation de copolymères triséquencés de type A(b)B(b)A, en synthétisant d'abord le bloc central difonctionnel, qui sert à amorcer la polymérisation du monomère A.

Les composés générateurs de radicaux multifonctionnels peuvent être constitués d'au moins trois groupements générateurs de radicaux monofonctionnels $A^1$, $A^2$ et $A^3$ issus des classes (c) à (j) précitées reliés entre eux par un cycle benzénique, comme, par exemple, ceux répondant à la formule :

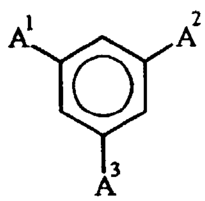

D'autres composés générateurs de radicaux bifonctionnels sont les tri- ou tétrahalométhanes et les dérivés trichlorométhylés des classes (a) et (b) précitées, ces mêmes tri- et tétrahalométhanes pouvant également servir de composés générateurs de radicaux multifonctionnels.

On pourrait également utiliser d'autres composés générateurs de radicaux difonctionnels que ceux représentés ci-dessus, notamment ceux de la famille des anhydrides acétiques comme l'anhydride d'acide chloroacétique et l'anhydride d'acide chlorodifluoroacétique.

La longueur des chaînes polymères étant préalablement déterminée par le rapport molaire du ou des monomères (méth)acryliques ou vinyliques sur le ou les composés générateurs de radicaux, ce rapport est de 1-100 000, avantageusement de 50 à 2 000. Quant au rapport molaire du métal M sur le (ou les) générateur(s) de radicaux, il est généralement compris entre 0,01 et 100, avantageusement entre 0,05 et 20 et plus particulièrement inférieur ou égal à 1. Le rapport molaire du sel de métal M (II) sur le ligand L, dans le cas de la formation du composé (I) in situ, peut varier entre 0,05 et 20.

Le paramètre de la température de polymérisation ou de copolymérisation est un point extrêmement important qui distingue le procédé de l'invention des procédés utilisant des systèmes catalytiques actuellement connus. Avec les procédés de contrôle de la polymérisation à l'aide de métaux de transition connus, il se produit une inactivité du catalyseur en dessous d'une température qui se situe autour de 100'C pour les systèmes au cuivre (CuCl/2,2-bipyridine). Les systèmes au ruthénium ($RuCl_2(PPh_3)_3$) sont également inactifs si l'on n'ajoute pas au milieu de polymérisation un activateur qui est un acide de Lewis, sensible à l'eau. On peut parler, dans le cadre de la présente invention, de conditions réactionnelles douces en ce sens que la température de polymérisation peut être abaissée à 0°C. De plus, et cela constitue un autre avantage, les systèmes conformes à la présente invention sont susceptibles d'être utilisés en présence d'eau car il n'y pas d'acide de Lewis. Ces avantages sont extrêmement importants d'autant plus que le stéréocontrôle de la réaction de polymérisation ou copolymérisation est favorisé par un abaissement de la température. D'autre part, les conditions réactionnelles en masse (c'est-à-dire dans le ou les monomères purs) et en solution, émulsion ou suspension sont d'une manière générale identiques. La température et tous les rapports molaires peuvent être les mêmes quel que soit le procédé de réaction utilisé. La possibilité de travailler, sans risques, dans le monomère pur constitue bien entendu une amélioration au regard des polymérisations radicalaires classiques. La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas. Pour le procédé industriel, ceci constitue bien entendu un progrès important puisque les polymérisations ou copolymérisations menées dans ces conditions ne risquent plus de devenir totalement incontrôlées. D'une manière générale, la polymérisation ou copolymérisation sera effectuée à une température de 0°C à 130'C, avantageusement entre 40 et 90°C sans aucune perte d'activité du catalyseur. On peut ainsi souligner que le polystyrène peut être obtenu à une température ne dépassant pas 100°C.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'émulsifiants. Les émulsifiants peuvent être des surfactants anioniques, tels que le dodécylbenzène sulfonate de sodium, le dodécyl sulfate de sodium, le lauryl sulfate de sodium et leurs mélanges ou du type neutre comme les esters de glycol, les esters de sorbitane et de polyéthylène glycol tels que le monolaurate, le monopalmitate, oléate et stéarate de sorbitane et de polyéthylène glycol, les esters d'acides gras et de polyéthylène glycol tels que le stéarate de polyéthylène glycol et les éthers d'alcool gras et de polyéthylène glycol tels que les éthers stéarylique et cétylique de polyéthylène glycol.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :

- leshydrocarburesaromatiques(apolairesaprotiques) :
  benzène, toluène, éthylbenzène, xylène ;
- les hydrocarbures chlorés (polaires aprotiques) :
  chlorure de méthylène, chlorobenzène ;
- les éthers, tels que le diphényl éther ;
- les éthers cycliques (polaires aprotiques) :
  tétrahydrofuranne, dioxane ;
- les esters (polaires) : acétate d'éthyle, acétate de cyclohexyle ;
- les cétones (polaires) : méthyl éthyl cétone, cyclohexanone.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser le diméthylformamide, le diméthylsulfoxyde, l'acétonitrile ou l'acétone.

Avantageusement, avant que la polymérisation n'ait lieu, le mélange des réactifs (monomère(s) et système d'amorçage) est agité pendant au moins 10 h. On a noté que, dans ce cas, la vitesse de polymérisation était plus grande.

D'une manière générale, le procédé de polymérisation et de copolymérisation suivant l'invention se déroule d'une manière identique pour l'homopolymérisation et la copolymérisation statistique. Pour la préparation de copolymères séquencés y compris les copolymères séquencés en étoile, les conditions expérimentales peuvent changer lors de l'addition d'un monomère différent du premier après la polymérisation du premier monomère. Par exemple, on peut faire varier la température dans un sens ou dans l'autre, le seconde dose pouvant être ajoutée avec un solvant. Pour la préparation de macromonomères ou de polymères $\alpha,\omega$ fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth)acryliques et vinyliques (vinylaromatiques, esters vinyliques comme acétate de vinyle ; chlorure de vinyle).

Le système d'amorçage selon l'invention convient aussi pour la (co)polymérisation de monomères oléfiniques, éventuellement fluorés, comme l'éthylène, le butène, l'hexène, le 1-octène. Il convient aussi pour la (co)polymérisation de monomères à doubles liaisons conjuguées, tels que butadiène et isoprène.

Par monomère acrylique au sens de la présente invention, on entend un monomère choisi parmi les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le groupe alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de $\beta$-hydroxyéthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Suivant l'invention, il a été constaté que, par une combinaison judicieuse d'un complexe de métal tel que défini précédemment, et d'un composé générateur de radicaux de polymérisation, on peut arriver à obtenir des homopolymères et des copolymères séquencés et statistiques parfaitement définis et contrôlés ainsi que des copolymères étoilés et des macromonomères et des polymères $\alpha,\omega$ fonctionnalisés (téléchéliques) qui n'ont jusqu'ici pu être synthétisé avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth)acryliques, vinyliques tels qu'obtenus par le procédé de l'invention présentent des masses moléculaires $\overline{Mn}$ se situant entre 400 et 10 000 000 g/mole et une polymolécularité $\overline{Mw}/\overline{Mn}$ particulièrement étroite, proche de 2 ou inférieure à 2. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise las stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :

- polymérisation homogène et vivante. La polymérisation est vivante selon les critères généralement avancés : évolution linéaire des masses moyennes en fonction de la conversion, évolution linéaire de ln(1/(1-conversion)) en fonction du temps, reprise de la polymérisation après ajout d'une nouvelle dose de monomère (Penczek, S. Dans *Makromol, chem. Rapid. commun.* 1991, *12*, 77) ;
- excellent contrôle moléculaire : $\overline{Mw}/\overline{Mn}$ étroit, proche de 2 ou inférieur à 2 ; bonne corrélation entre le $\overline{Mn}$ théorique et le $\overline{Mn}$ expérimental ; possibilité de préparation de copolymères séquencés y compris ceux en étoile ;
- polymérisation quantitative entraînant une consommation totale du monomère ;
- conditions de température douces allant de 0°C à 130°C et pression ordinaire ;
- le temps de réaction dépend de la concentration du milieu réactionnel. En effet, plus la concentration en monomère est faible, plus la cinétique de polymérisation sera lente. En milieu concentré ([monomère]> 6 mole $1^{-1}$), la polymérisation peut être terminée en moins de deux heures. En milieu plus dilué, les polymérisations sont généralement arrêtées après 24 heures de réaction ;
- compatibilité en milieux aqueux car les catalyseurs utilisés ne se dégradent pas en présence d'eau. Possibilité de polymérisation en émulsion et suspension, en présence ou non d'émulsifiants, l'utilisation de phosphines solubles telles que, par exemple, $((Na^{+-}O_3SC_6H_4)_3P)$ permettant de solubiliser le complexe dans la phase aqueuse ;
- possibilité de stéréocontrôle, c'est-à-dire du contrôle de la tacticité hétéro, syndio ou isotactique, en utilisant des catalyseurs chiraux ;
- excellent contrôle de la synthèse des polymères ou copolymères obtenus dont les masses moléculaires varient entre 400 et 10 000 000 g/mole ;
- la résistance à la dégradation thermique des polymères et copolymères est améliorée en raison de l'absence de réactions de terminaison (combinaisons et disproportions), pouvant être montrée notamment par analyse thermogravimétrique ;
- obtention de nouveaux produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux ;
- obtention de matériaux à propriétés améliorées l'absence de doubles liaisons terminales permet d'augmenter la température de dépolymérisation des polymères, notamment du PMMA ;
- polymérisation contrôlée qui permet d'éviter l'autoaccélération de la polymérisation (appelée effet de gel ou effet Trommsdorf). Le contrôle de la polymérisation par le complexe de métal M permet d'éviter l'autoaccélération subite de la polymérisation avec prise en masse très rapide (voir exemple comparatif 8). Ce phénomène est en général néfaste pour l'industriel et le produit. En particulier, pour le PMMA devant se présenter sous forme de plaques coulées, il est important que la polymérisation soit contrôlée afin d'éviter l'apparition de bulles, ou de défauts à la surface de la plaque. On peut parvenir à éviter le point de gel à l'aide de cycles, parfois longs, de températures adaptés. Une seule température est préférentiellement utilisée, ce qui est une simplification pour le procédé.

Dans le cas des complexes du fer, on peut citer les avantages supplémentaires suivants :

- utilisation de produits simples, peu chers et facilement disponibles sur le marché. La préparation du complexe de fer est simple à réaliser et ne nécessite que la mise en commun dans le monomère ou dans un solvant de deux réactifs sel de fer (II) et phosphite ou phosphine. La préparation est surtout très simple.

- les complexes du fer n'exigent pas de conditions soignées de polymérisation, telles que celles employées par exemple avec des catalyseurs de type Ziegler-Natta.

On donne ci-après des exemples non limitatifs décrivant la préparation de polymères tels qu'obtenus suivant le procédé de la présente invention.

Les valeurs $\overline{Mn}_{exp}$ et $\overline{Mw}/\overline{Mn}$ sont obtenues de la façon suivante. On effectue une chromatographie d'exclusion stérique (SEC) qui permet de séparer les macromolécules de polymère suivant leur taille en solution (volume hydrodynamique). Elles sont alors éluées par un solvant (phase mobile de THF) du polymère. Les plus grosses molécules sortent en premier et les plus petites en dernier en raison du parcours plus long dans les pores de la colonne (phase stationnaire). Des PMMA de masses absolues connues (déterminées par une autre technique) sont également injectées (étalons) et permettent d'obtenir une courbe d'étalonnage à partir de laquelle on détermine les masses moléculaires relatives ($\overline{Mn}_{exp}$) du polymère dont on veut connaître la taille et la distribution des masses ou polydispersité ($\overline{Mw}/\overline{Mn}$).

<u>Exemple 1</u> : Polymérisation du méthacrylate de méthyle (MMA)

Dans un tube à essai, muni d'un bouchon à vis et d'un joint en Téflon®, on introduit à la température ambiante et sous atmosphère inerte, 30,0 g de MMA, 0,15 g de bromotrichlorométhane (7,5 x $10^{-4}$ mole), 0,097 g de chlorure de fer (II) (7,5 x $10^{-4}$ mole) et 0,3814 g de phosphite de triéthyle (2,3 x $10^{-3}$ mole). Le tube est placé dans un bain d'huile maintenu à 70'C et est agité par un mouvement de va-et-vient. Au bout de 87 minutes, le tube est sorti du bain d'huile et le polymère est récupéré pour analyse GPC.

conversion : 100%
$\overline{Mn}_{exp}$ = 33600 g/mole (étalon de PMMA)
$\overline{Mn}_{théo}$ = 40000 g/mole
$\overline{Mw}/\overline{Mn}$ = 2,2

<u>Exemple 2</u> : Polymérisation du méthacrylate de méthyle (MMA)

On reprend les conditions de l'Exemple 1, mais on remplace le chlorure de fer (II) par 0,1650 g de bromure de fer (II) (7,6 x $10^{-4}$ mole).

Durée de polymérisation = 52 min.
Conversion : 100%
$\overline{Mn}_{exp}$ = 36700 g/mole (étalon de PMMA)
$\overline{Mn}_{théo}$ = 40000 g/mole
$\overline{Mw}/\overline{Mn}$ = 1,8

<u>Exemple 3</u> : Polymérisation du méthacrylate de méthyle (MMA)

On reprend les conditions de l'Exemple 2, mais on réalise la polymérisation à 60°C au lieu de 70°C. La conversion est déterminée après évaporation du monomère résiduel et pesée du polymère dans l'échantillon.

Durée de polymérisation = 166 min.
Conversion : 100%
$\overline{Mn}_{exp}$ = 36200 g/mole (étalon de PMMA)
$\overline{Mn}_{théo}$ = 40000 g/mole
$\overline{Mw}/\overline{Mn}$ = 2,4

<u>Exemple 4</u> : Polymérisation de l'acrylate de butyle (ABu)

Dans un tube à essai, muni d'un bouchon à vis et d'un joint en Téflon®, on introduit à la température ambiante et sous atmosphère inerte, 30,0 g de ABu, 0,15 g de bromotrichlorométhane (7,5 x $10^{-4}$ mole), 0,097 g (7,5 x $10^{-4}$ mole) de chlorure de fer (II) et 0,3814 g de phosphite de triéthyle (2,27 x $10^{-3}$ mole). Le tube est placé dans un bain d'huile maintenu à 104,5°C et agité par un mouvement de va-et-vient. Au bout de 1185 minutes, le tube est sorti du bain d'huile et le polymère est récupéré pour analyse GPC.

t = 1185 min.

Conversion : 17%
$\overline{Mn}_{exp}$ = 8773 g/mole (étalon de PMMA)
$\overline{Mn}_{théo}$ = 6800 g/mole
$\overline{Mw}/\overline{Mn}$ = 2,1

Cet exemple montre que l'on peut amorcer la polymérisation d'un acrylate d'alkyle primaire.

Exemple 5 : Polymérisation du méthacrylate de méthyle (MMA)

Dans un réacteur en acier inoxydable de 2 1 équipé d'un agitateur à ancre et d'une régulation de température, on introduit à 50°C et sous atmosphère inerte une solution préparée à température ambiante et sous atmosphère inerte et contenant 300,0 g de méthacrylate de méthyle, 1,50 g de bromotrichlorométhane (7,5 x $10^{-3}$ mole), 1,65 g de $FeBr_2$ (7,5 x $10^{-3}$ mole) et 3,814 g (2,27 x $10^{-2}$ mole) de $P(OEt)_3$. La couleur du liquide après le mélange des réactifs est orange.

L'instant auquel le mélange atteint la température de 50°C est défini comme l'instant de départ de l'essai. On procède au cours du temps à des prélèvements. Ceci permet de calculer la conversion en polymère obtenue après évaporation sous vide (25 mbar, 140°C, 20 min) du monomère restant dans un échantillon.

| t (min.) | Conversion (%) | $\overline{Mn}_{exp}$ (g/mole) | $\overline{Mn}_{théo}$ (g/mole) | $\overline{Mw}/\overline{Mn}$ | ln(1/(1-conversion)) |
|---|---|---|---|---|---|
| 0 | 0 | 0 | 0 | - | 0,00 |
| 30 | 4,7 | 2524 | 1880 | 2,06 | 0,05 |
| 60 | 8,2 | 3726 | 3280 | 2,16 | 0,09 |
| 90 | 13,9 | 6369 | 5560 | 1,94 | 0,15 |
| 165 | 38,6 | 15250 | 15440 | 1,82 | 0,49 |
| 180 | 50,6 | 20070 | 20240 | 1,72 | 0,71 |
| 200 | 59,3 | 21950 | 23720 | 1,79 | 0,90 |

L'évolution linéaire des masses moyennes $\overline{Mn}_{exp}$ en fonction de la conversion ainsi que de ln (1/(1-conversion)) en fonction du temps montre que le système est vivant (bon contrôle de la polymérisation).

Exemple 6: Comparatif

Dans un réacteur de 2 litres, on amorce la polymérisation du méthacrylate de méthyle (300,0 g) en masse à l'aide de l'AIBN (0,616 g, 3,7 x $10^{-3}$ mole) et à 70°C.

| t (min.) | Conversion (%) | $\overline{Mn}_{exp}$ (g/mole) | $\overline{Mw}/\overline{Mn}$ | ln(1/(1-conversion)) |
|---|---|---|---|---|
| 0 | 0 | 0 | - | 0,00 |
| 15 | 8,7 | 48240 | 4,6 | 0,09 |
| 30 | 34,5 | 50370 | 3,8 | 0,42 |
| 35 | 42,0 | 67120 | 3,2 | 0,54 |
| exothermie jusqu'à 110°C | | | | |
| 40 | 100,0 | 65970 | 2,8 | |

conversion : 100%
$\overline{Mn}_{exp}$ = 65970 g/mole (étalon PMMA)
$\overline{Mn}_{théo}$ = 40000 g/mole
$\overline{Mw}/\overline{Mn}$ = 2,8

La polymérisation s'autoaccélère rapidement. Elle n'est pas vivante comme le montre la courbe que l'on peut tracer : ln (1/(1-conversion)) en fonction du temps, ou encore la courbe que l'on peut tracer : $\overline{Mn}_{exp}$ en fonction de la conversion, lesquelles courbes ne sont pas linéaires.

Exemple 7 : Polymérisation du méthacrylate de méthyle (MMA)

On reprend les conditions de l'Exemple 5, mais on ajoute 90 g de toluène. On agite le mélange des réactifs, pendant 18 h environ, puis on l'introduit dans le réacteur. La couleur du mélange est alors noire.

| t (min.) | Conversion (%) | $\overline{Mn}_{exp}$ (g/mole) | $\overline{Mn}_{théo}$ (g/mole) | $\overline{Mw}/\overline{Mn}$ | ln(1/(1-conversion) |
|---|---|---|---|---|---|
| 0 | 0 | 0 | 0 | - | 0,00 |
| 30 | 28,4 | 13150 | 11400 | 1,7 | 0,33 |
| 60 | 38,1 | - | 15240 | - | 0,48 |
| 90 | 53,8 | 23000 | 21500 | 1,6 | 0,77 |
| 120 | 76,1 | - | 30440 | - | 1,43 |
| 130 | 78,4 | 31470 | 31400 | 1,5 | 1,53 |

On peut noter l'évolution linéaire de ln(1/1-conversion)) en fonction du temps. Ceci indique que le nombre total de radicaux est constant dans le milieu de polymérisation ; la polymérisation est vivante. La polymérisation est bien contrôlée, la $\overline{Mn}$ expérimentale étant très voisine de la $\overline{Mn}$ théorique.

Exemple 8 : Polymérisation du méthacrylate de méthyle (MMA)

On reprend les conditions de l'Exemple 5 mais on ajoute 90 g de toluène. Le mélange est introduit immédiatement après mise en contact des réactifs.

| t (min.) | Conversion (%) | $\overline{Mn}_{exp}$ (g/mole) | $\overline{Mn}_{théo}$ (g/mole) | $\overline{Mw}/\overline{Mn}$ | ln(1/(1-conversion)) |
|---|---|---|---|---|---|
| 0 | 0 | 0 | 0 | - | 0 |
| 80 | 23 | 11300 | 9200 | 1,7 | 0,26 |
| 120 | 34,8 | - | 13920 | - | 0,43 |
| 127 | 37,8 | - | 15120 | - | 0,48 |
| 170 | 47,6 | 20280 | 19040 | 1,7 | 0,65 |
| 180 | 50,4 | - | 20160 | - | 0,70 |
| 187 | 55,1 | 22130 | 22040 | 1,6 | 0,80 |

A l'Exemple 7, le mélange des réactifs a lieu pendant une durée plus longue qu'à l'Exemple 8. On peut noter alors que la vitesse de polymérisation est plus grande à l'Exemple 7 (78,4% de conversion en 130 min.).

Exemple 9 : Polymérisation du méthacrylate de méthyle (MMA)

On reprend les conditions de l'Exemple 5 mais on ajoute 0,83 g de $FeBr_2$ et 1,91 g de $P(OEt)_3$. La quantité de sel métallique et de ligand est donc divisée par deux par rapport à l'Exemple 5. Le mélange des réactifs est introduit tout de suite.

| t (min.) | Conversion (%) | $\overline{Mn}_{exp}$ (g/mole) | $\overline{Mn}_{théo}$ (g/mole) | $\overline{Mw}/\overline{Mn}$ | ln(1/(1-conversion)) |
|---|---|---|---|---|---|
| 0 | 0 | 0 | 0 | - | 0,00 |
| 30 | 7,2 | 5500 | 2880 | 1,9 | 0,07 |
| 145 | 28,3 | 13900 | 11320 | 1,9 | 0,33 |
| 180 | 41,2 | 18300 | 16480 | 1,7 | 0,53 |
| 210 | 51 | 22400 | 20400 | 1,6 | 0,71 |
| 290 | 100 | 40300 | 40000 | 1,6 | - |

Exemple 10 : Comparatif

On reprend les conditions de l'Exemple 7 mais on ne met pas de phosphite. Il n'y a pas de polymérisation.

Exemple 11 : Comparatif

Dans un tube à essai muni d'un joint de Téflon, on met 30,0 g de MMA et 0,06157 g d'azobisisobutyronitrile (AIBN). Le tube est agité par un mouvement de va-et-vient dans un bain d'huile porté à la température de 70°C. Au bout de 2 heures, il y a prise en masse. Le PMMA est récupéré et analysé par GPC.

| | |
|---|---|
| Conversion | 100% |
| $\overline{Mn}$ | 99780 g/mole (étalon de PMMA) |
| $\overline{Mw}/\overline{Mn}$ | 9,9 |

Exemple 12 : Polymérisation du styrène

Dans un tube à essai, muni d'un bouchon à vis et d'un joint en Téflon®, on introduit à la température ambiante et sous atmosphère inerte, 30,0 g de styrène, 0,15 g de bromotrichlorométhane, 0,097 g de chlorure de fer (II) et 0,3814 g de phosphite de triéthyle. Le tube est placé dans un bain d'huile maintenu à 100°C et est agité par un mouvement de va-et-vient. Au bout de 1400 minutes, le tube est sorti du bain d'huile et le polymère est récupéré pour analyse GPC.

Conversion= 100%
$\overline{Mn}_{exp}$ = 11070 g/mole (étalons de polystyrène)
$\overline{Mn}_{théo}$ = 17600 g/mole
$\overline{Mw}/\overline{Mn}$ = 2,1.

## Revendications

1. Procédé de polymérisation ou copolymérisation radicalaire contrôlée de monomères (méth)acryliques et/ou vinyliques, caractérisé par le fait que l'on polymérise ou copolymérise en masse, solution, émulsion ou suspension, à une température pouvant descendre jusqu'à 0°C, au moins un desdits monomères

   - en présence d'un système d'amorçage comprenant au moins un composé générateur de radicaux et au moins un catalyseur constitué par un complexe de métal, représenté par la formule suivante (I) :

     $$MA_a(L)_n \quad \text{(I)}$$

     dans laquelle :

     . M représente Fe, Ru ou Os ;
     . A représente un halogène ou un pseudo-halogène ;
     . les L, identiques ou différents, représentent chacun un ligand, pouvant être un ligand chiral, qui est choisi parmi PRR'R", P(OR) (OR') (OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué,
     au moins deux de ces ligands pouvant être reliés entre eux par un ou plusieurs radicaux bivalents ;
     . a est un entier compris entre 1 et 3 ;
     . n est un entier compris entre 1 et 3 ;

   - et en l'absence d'activateurs,
     les systèmes chlorure de 1-phényléthyle / $RuCl_2$ - $PPh_3$ et chlorure de benzyle / $FeCl_2$ - $(EtO)_3P$ (Ph = phényle ; Et = éthyle) étant exclus dans le cas de la polymérisation du styrène.

2. Procédé conforme à la revendication 1, caractérisé en ce que le métal M est Fe.

**3.** Procédé conforme à l'une des revendications 1 à 2, caractérisé en ce que A représente un halogène choisi parmi Cl, Br, F et I ou un pseudohalogène choisi parmi CN, NCS, $NO_2$ et $N_3$.

**4.** Procédé conforme à l'une des revendications 1 à 3, caractérisé en ce que les L représentent chacun une phosphine PRR'R", R, R', R" représentant chacun indépendamment un groupe alkyle en $C_1$-$C_{14}$ pouvant être substitué par $SO_3^-$, COOH, alcoxy, alkyl-S- ou un groupe aromatique pouvant être substitué par au moins un groupement choisi notamment parmi halogène, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

**5.** Procédé conforme à l'une des revendications 1 à 4, caractérisé en ce que le radical bivalent reliant deux ligands L est un radical alkylène.

**6.** Procédé conforme à l'une des revendications 1 à 5, caractérisé en ce que le complexe de formule (I) porte une charge cationique.

**7.** Procédé conforme à l'une des revendications 1 à 4, caractérisé en ce que le catalyseur est $FeX_2(PPh_3)_2$ ou $FeX_2[P(OR)_3]_3$, X représentant un halogène et R un groupe alkyle en $C_1$-$C_{14}$.

**8.** Procédé conforme à l'une des revendications 1 à 7, caractérisé en ce que le complexe de formule (I) est formé in situ dans le milieu réactionnel à partir d'un sel de métal (II) et des ligands L.

**9.** Procédé conforme à l'une des revendications 1 à 8, caractérisé en ce que le composé générateur de radicaux libres est monofonctionnel et choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-$C_{14}$ ; et
- Z = Cl ou Br ;

(b) les dérivés de formule :

$$R^3CCl_3$$

où $R^3$ représente phényle ; benzyle ; benzoyle alcoxycarbonyle ; $R^4CO$ avec $R^4$ représentant alkyle en $C_1$-$C_{14}$ ou aryle ; alkyle ; mésityle ; trifluorométhyle; ou nitro ;

(c) les dérivés de formule :

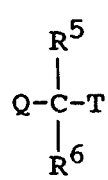

dans laquelle :

- Q représente un atome de chlore ou de brome ou un groupe acétate ou trifluoroacétate ou triflate ;
- $R^5$ représente un atome d'hydrogène, un groupe alkyle en $C_1$-$C_{14}$ ou un groupe aromatique, ou un groupe $-CH_2OH$ ;

- T représente un groupe

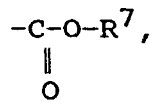

  avec $R^7$ représentant hydrogène ou un groupe alkyle ou aromatique; un groupe CN ; un groupe

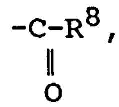

  avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9$CO, avec $R^9$ représentant alkyle en $C_1$-$C_{14}$ ou aryle ;
- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

(d) les composés lactones ou lactames halogénés en $\alpha$ *;*

(e) les N-halosuccinimides et les N-halophtalimides ;

(f) les halogénures d'alkyl-sulfonyle et les halogénures d'arylène-sulfonyle ;

(g) les composés de formule :

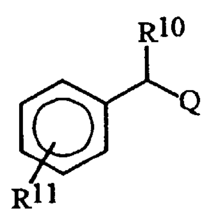

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ; et
- Q a la signification donnée précédemment ;

(h) les composés de formule :

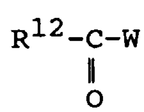

où :

- $R^{12}$ représente alkyle en $C_1$-$C_{14}$ ou aryle ;
- W représente halogène ou pseudohalogène ;

(i) les composés de formule :

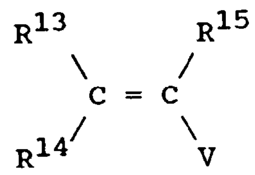

où :

- $R^{13}$, $R^{13}$ et $R^{15}$ représentent chacun indépendamment alkyle en $C_1$-$C_{14}$ ou aryle ; et
- V représente halogène, acétate, trifluoroacétate, triflate ;

(j) les halogénures aromatiques de formule :

$$Ar - U$$

où :

- Ar représente un groupement aromatique, tel que $C_6H_5$- pouvant être substitué en position ortho, méta ou para par un groupement électroattracteur ou électrodonneur ; et
- U représente un halogène.

**10.** Procédé conforme à l'une des revendications 1 à 8, caractérisé en ce que le composé générateur de radicaux est multifonctionnel et est constitué par au moins deux groupements générateurs de radicaux monofonctionnels issus des classes (c) à (j) définies à la revendication 6, reliés par une chaîne d'unités méthylène ou par un cycle benzénique, ou est choisi parmi les anhydrides acétiques comme l'anhydride d'acide chloroacétique et l'anhydride d'acide chlorodifluoroacétique, et les tri- ou tétrahalométhanes et les dérivés trichlorométhylés des classes (a) et (b) définies à la revendication 9.

**11.** Procédé conforme à la revendication 9, caractérisé en ce que le composé générateur de radicaux est un halogénure d'alkyle ou un halogénure d'alkyl- ou arylène-sulfonyle.

**12.** Procédé conforme à l'une quelconque des revendications 1 à 11, caractérisé en ce que le rapport molaire du ou des monomères sur le ou les composés générateurs de radicaux est de 1 - 100 000.

**13.** Procédé conforme à l'une des revendications 1 à 12, caractérisé en ce que le rapport molaire du métal sur le (ou les) générateur(s) de radicaux est de 0,01 à 100.

**14.** Procédé conforme à la revendication 8, caractérisé en ce que le rapport molaire du sel de métal M (II) sur le ligand L est de 0,05 à 20.

**15.** Procédé conforme à l'une quelconque des revendications 1 à 14, caractérisé en ce que le polymérisation ou copolymérisation est effectuée à une température de 0°C à 130°C.

**16.** Procédé conforme à l'une quelconque des revendications 1 à 15, caractérisé en ce que les monomères polymérisables ou copolymérisables comprennent au moins un monomère choisi parmi les méthacrylates, les acrylates, les dérivés vinylaromatiques, l'acétate de vinyle et le chlorure de vinyle.

**17.** Procédé conforme à la revendication 16, caractérisé en ce que le monomère est choisi dans le groupe comprenant le méthacrylate de méthyle, le méthacrylate d'éthyle, le méthacrylate de n-butyle, l'acrylate de n-butyle, l'acrylonitrile et le styrène.

**18.** Procédé conforme à l'une des revendications 1 à 17, caractérisé en qu'avant de conduire la polymérisation, on agite le mélange des réactifs, monomère(s) et système d'amorçage, pendant au moins 10 h.

**19.** Procédé conforme à l'une des revendications 1 à 18, caractérisé en ce qu'on conduit une copolymérisation séquencée en introduisant, dans le milieu de polymérisation dans lequel le premier monomère a été polymérisé, un

second monomère le cas échéant avec un nouvel ajout de système d'amorçage.

Office européen des brevets

# RAPPORT DE RECHERCHE EUROPEENNE

Numéro de la demande
EP 97 40 1441

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.6) |
| D,A | TAKAYUKI OTSU: "NEW INITIATOR SYSTEMS FOR RADICAL POLYMERIZATION OF VINYL MONOMERS" JOURNAL OF POLYMER SCIENCE, PART B, POLYMER LETTERS, vol. 5, no. 8, août 1967, pages 697-701, XP002028806 --- | | C08F4/00 |
| A | US 4 145 486 A (W.O.HAAG) --- | | |
| A | EP 0 265 091 A (E.I.DU PONT DE NEMOURS AND CO.) --- | | |
| A | EP 0 511 405 A (NIPPON KAYAKU KABUSHIKI KAISHA) ----- | | |
| | | | DOMAINES TECHNIQUES RECHERCHES (Int.Cl.6) |
| | | | C08F |

Le présent rapport a été établi pour toutes les revendications

| Lieu de la recherche | Date d'achèvement de la recherche | Examinateur |
|---|---|---|
| LA HAYE | 16 décembre 1997 | Cauwenberg, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)